(19) Europäisches Patentamt
European Patent Office
Office européen des brevets

(11) EP 1 293 537 A1

(12) **EUROPEAN PATENT APPLICATION**
published in accordance with Art. 158(3) EPC

(43) Date of publication:
**19.03.2003 Bulletin 2003/12**

(21) Application number: **01941073.7**

(22) Date of filing: **15.06.2001**

(51) Int Cl.[7]: **C08L 67/00**, C08L 69/00

(86) International application number:
**PCT/JP01/05144**

(87) International publication number:
**WO 01/098412 (27.12.2001 Gazette 2001/52)**

(84) Designated Contracting States:
**AT BE CH CY DE DK ES FI FR GB GR IE IT LI LU MC NL PT SE TR**

(30) Priority: **19.06.2000 JP 2000182974**
**14.07.2000 JP 2000213947**

(71) Applicant: **TEIJIN LIMITED**
**Osaka-shi Osaka 541-0054 (JP)**

(72) Inventors:
- **MIYOSHI, Takanori**
  **Iwakuni-shi Yamaguchi 740-0014 (JP)**
- **SAKURAI, Hiroshi**
  **Iwakuni-shi Yamaguchi 740-0014 (JP)**
- **MATSUMURA, Shunichi**
  **Iwakuni-shi Yamaguchi 740-0014 (JP)**
- **ISHIWATA, Toyoaki**
  **Iwakuni-shi Yamaguchi 740-0014 (JP)**

(74) Representative: **Hallybone, Huw George et al**
**Carpmaels and Ransford,**
**43 Bloomsbury Square**
**London WC1A 2RA (GB)**

# (54) PRODUCT FROM MELT OF WHOLLY AROMATIC POLYESTER AND AROMATIC POLYCARBONATE AND PROCESS FOR PRODUCING THE SAME

(57) A molten product of a wholly aromatic polyester carbonate or wholly aromatic polyester and an aromatic polycarbonate, which is rarely colored even when it is molten at a high temperature. This molten product is used for the production of car parts and electric and electronic parts.

EP 1 293 537 A1

**Description**

Field of the Invention

The present invention relates to a molten product of a wholly aromatic polyester, particularly a wholly aromatic polyester carbonate, and an aromatic polycarbonate and to a production process therefor. More specifically, it relates to the above molten product which is excellent in color and transparency and is rarely colored at the time of melting and to a production process therefor.

Description of the Prior Art

Requirements for engineering plastics having high heat resistance and excellent mechanical strength have been becoming higher and higher. Non-crystalline engineering plastics include wholly aromatic polyesters derived from aromatic diols and aromatic dicarboxylic acids. For example, a wholly aromatic polyester which comprises 2,2-bis (4-hydroxyphenyl)propane (to be referred to as "bisphenol A" hereinafter) as an aromatic diol and terephthalic acid or isophthalic acid as an aromatic dicarboxylic acid has relatively well-balanced characteristic properties. Therefore, it is used for various application purposes.
However, the wholly aromatic polyester has low fluidity. A resin composition comprising a polycarbonate is known as what improves this defect.

Summary of the Invention

It is an object of the present invention to provide a molten product of a wholly aromatic polyester, particularly a wholly aromatic polyester carbonate, and an aromatic polycarbonate.
It is another object of the present invention to provide the above molten product which is excellent in color and transparency and is rarely colored at the time of melting.
It is still another object of the present invention to provide a process for producing the above molten product and an article molded from the above molten product.
Other objects and advantages of the present invention will become apparent from the following description.
According to the present invention, firstly, the above objects and advantages of the present invention are attained by a molten product (may be referred to as "first molten product" hereinafter) which is (1) a product obtained by melt-mixing 1 to 99 parts by weight of a wholly aromatic polyester carbonate comprising 50 to 99 mol% of a recurring unit represented by the following formula (I):

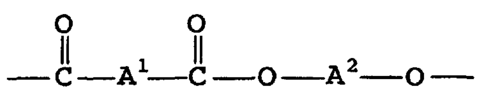 ···(I)

wherein $A^1$ and $A^2$ are the same or different and each a substituted or unsubstituted aromatic group, and 50 to 1 mol% of a recurring unit represented by the following formula (II):

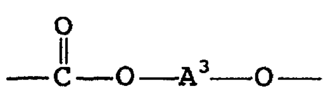 ···(II)

wherein $A^3$ is a substituted or unsubstituted aromatic group, with 99 to 1 part by weight of an aromatic polycarbonate, the total amount of the wholly aromatic polyester carbonate and the aromatic polycarbonate being 100 parts by weight, and which has (2) a total light transmittance of a 2 mm-thick plate molded therefrom of more than 85 % and (3) a yellow index (YI) value based on JIS K7103 of 28 or less.
According to the present invention, secondly, the above objects and advantages of the present invention are attained by a process for producing the molten product of claim 1, comprising the step of melt-mixing 1 to 99 parts by weight of a wholly aromatic polyester carbonate comprising 50 to 99 mol% of a recurring unit represented by the following formula (I):

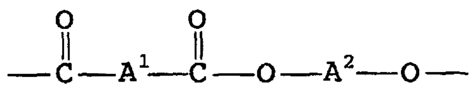

···(I)

wherein $A^1$ and $A^2$ are the same or different and each a substituted or unsubstituted aromatic group, and 50 to 1 mol% of a recurring unit represented by the following formula (II):

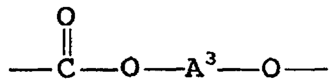

···(II)

wherein $A^3$ is a substituted or unsubstituted aromatic group, with 99 to 1 part by weight of an aromatic polycarbonate, the total amount of the wholly aromatic polyester carbonate and the aromatic polycarbonate being 100 parts by weight.

Further, according to the present invention, thirdly, the above objects and advantages of the present invention are attained by providing a molded article, particularly an injection molded article made from the above molten product.

Finally, according to the present invention, the above objects and advantages of the present invention are attained by a molten product (may be referred to as "second molten product" hereinafter) which is (1) a product obtained by melt-mixing 1 to 99 parts by weight of a wholly aromatic polyester consisting substantially of a recurring unit represented by the above formula (I) with 99 to 1 part by weight of an aromatic polycarbonate, the total amount of the wholly aromatic polyester and the aromatic polycarbonate being 100 parts by weight,
and which has (2) a total light transmittance of a 2 mm-thick plate molded therefrom of more than 85 % and (3) a yellow index (YI) value based on JIS K7103 of 28 or less.

## The Preferred Embodiments of the Invention

The present invention will be described in detail hereinbelow. A description is first given of the first molten product of the present invention. The first molten product of the present invention is a product obtained by melt-mixing a wholly aromatic polyester carbonate with an aromatic polycarbonate. The wholly aromatic polyester carbonate comprises the recurring unit represented by the above formula (I) and the recurring unit represented by the above formula (II). The amount of the recurring unit represented by the above formula (I) is 50 to 99 mol%, preferably 50 to 97 mol%, more preferably 55 to 97 mol% and the amount of the recurring unit represented by the above formula (II) is 50 to 1 mol%, preferably 50 to 3 mol%, more preferably 45 to 3 mol% based on the total of the recurring units represented by the above formula (I) and the recurring unit represented by the above formula (II).

In the above formula (I), $A^1$ and $A^2$ are the same or different and each a substituted or unsubstituted aromatic group. In the above formula (II), $A^3$ is a substituted or unsubstituted aromatic group. The substituent of the aromatic group is a halogen atom, alkyl group having 1 to 6 carbon atoms, cycloalkyl group having 5 or 6 carbon atoms or aralkyl group having 7 to 12 carbon atoms.

Examples of the halogen atom include fluorine and chlorine. Examples of the alkyl group having 1 to 6 carbon atoms include methyl, ethyl, n-propyl, i-propyl, n-butyl and n-hexyl.

Examples of the cycloalkyl group having 5 or 6 carbon atoms include cyclopentyl and cyclohexyl.

Examples of the aralkyl group having 7 to 12 carbon atoms include benzyl and phenethyl.

Preferred examples of the unsubstituted aromatic group represented by $A^1$ include 1,4-phenylene, 1,3-phenylene, 2,6-naphthylene, 2,7-naphthylene, 1,4-naphthylene, 4,4'-diphenylene, bis(4-phenylene)ether, bis(4-phenylene)sulfone and diphenyleneindane. Examples of the unsubstituted aromatic group represented by $A^2$ include an arylene group and a group represented by the following formula:

$$—A^{41}—X—A^{42}— \qquad \text{(I)-a.}$$

Examples of the arylene group include 1,4-phenylene and 4,4'-biphenylene.

In the above formula, $A^{41}$ and $A^{42}$ are each a substituted or unsubstituted phenylene group, and X is a group represented by the following formula (IV)-a:

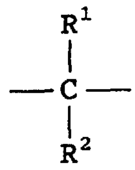

···(IV)-a

wherein $R^1$ and $R^2$ are each independently a hydrogen atom, halogen atom, alkyl group having 1 to 6 carbon atoms, cycloalkyl group having 5 or 6 carbon atoms, aryl group having 6 to 12 carbon atoms or aralkyl group having 7 to 12 carbon atoms, a group represented by the following formula (IV)-b:

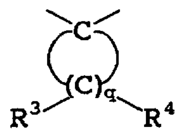

···(IV)-b

wherein $R^3$ and $R^4$ are defined the same as $R^1$ and $R^2$ in the formula (IV)-a, and q is an integer of 4 to 10, or a group represented by the following formula (IV)-c:

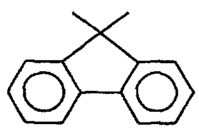

(IV)-c.

Examples of the substituent of the phenylene group represented by $A^{41}$ and $A^{42}$ are the same as those listed for the above substituent.

Examples of the unsubstituted aromatic group represented by $A^3$ are the same as those listed for the unsubstituted aromatic group represented by $A^2$.

$A^2$ in the formula (I) and $A^3$ in the formula (II) are preferably identical to each other. In this case, $A^2$ and $A^3$ are preferably represented by the above formula (I)-(a) in which $A^{41}$ and $A^{42}$ are both 1,4-phenylene and X is particularly preferably a group in which $R^1$ and $R^2$ are both a methyl group.

The wholly aromatic polyester carbonate of the present invention may contain another ester unit or carbonate unit in limits not prejudicial to the object of the present invention, that is, in amount of 10 mol% or less based on the total of all the recurring units, in addition to the recurring unit represented by the above formula (I) and the recurring unit represented by the above formula (II).

Preferably, the terminal groups of the above wholly aromatic polyester carbonate consist substantially of a carboxyl group, phenolic OH group and aryl group. The above wholly aromatic polyester carbonate preferably contains a terminal carboxyl group and a terminal phenolic OH group in a total amount of 300 equivalents/$10^6$ g or less and a terminal carboxyl group in an amount of 20 equivalents/$10^6$ g or less.

As described above, the total amount of the terminal phenolic OH group and the terminal carboxyl group is preferably 300 equivalents/$10^6$ g or less. Thereby, the marked coloring of the molten product at the time of melting can be suppressed. The total amount of the terminal phenolic OH group and the terminal carboxyl group is more preferably 0.05 to 250 equivalents/$10^6$ g, particularly preferably 0.1 to 200 equivalents/$10^6$ g. To further reduce the total amount of the terminal phenolic OH group and the terminal carboxyl group to less than 0.05 equivalents/$10^6$ g, the wholly aromatic polyester carbonate must be reacted with a special terminal capping agent or polymerized for a long time. As a result, an obtained polymer may be colored disadvantageously.

The amount of the terminal carboxyl group is preferably 20 equivalents/$10^6$ g or less. Thereby, the foaming of the molten product at the time of melting can be suppressed. When the amount of the terminal carboxyl group is larger than 20 equivalents/$10^6$ g, the molten product may foam at the time of melting. The amount of the terminal carboxyl group is more preferably 0.01 to 18 equivalents/$10^6$ g, particularly preferably 0.05 to 15 equivalents/$10^6$ g. To reduce the amount of the terminal carboxyl group to less than 0.01 equivalents/$10^6$ g, the wholly aromatic polyester carbonate must be reacted with a special terminal capping agent or polymerized for a long time. As a result, an obtained polymer may be colored disadvantageously.

Similarly, the wholly aromatic polyester carbonate contains the terminal phenolic OH group in an amount of preferably 0.95 equivalent or less, more preferably 0.8 equivalent or less, much more preferably 0.7 equivalent or less

based on 1 equivalent of the total of the terminal phenolic OH group and the terminal aryl group.

The above wholly aromatic polyester carbonate of the present invention can be preferably produced as a random polymer by melt polymerizing an aromatic dicarboxylic acid, aromatic dihydroxy compound and carbonic acid diester.

Surprisingly, a molten product obtained from a wholly aromatic polyester carbonate obtained by melt polymerization is less colored at the time of melting than a molten product obtained from a wholly aromatic polyester carbonate obtained by interfacial polymerization. The reason for this is unknown. However, it is assumed that the wholly aromatic polyester carbonate obtained by melt polymerization rarely contains or does not contain chlorine atoms whereas it is difficult to completely remove chlorine atoms from the wholly aromatic polyester carbonate obtained by interfacial polymerization.

The wholly aromatic polyester carbonate used in the present invention contains chlorine in an amount of preferably not more than 100 ppm, more preferably not more than 80 ppm, much more preferably not more than 50 ppm, particularly preferably not more than 10 ppm. When the amount of chlorine contained in the wholly aromatic polyester carbonate is lager than 100 ppm, the coloring of the molten product at the time of melt molding may become marked disadvantageously.

Examples of the above aromatic dicarboxylic acid include terephthalic acid, isophthalic acid, methylterephthalic acid, methylisophthalic acid, naphthalene-2,6-dicarboxylic acid, naphthalene-2,7-dicarboxylic acid, naphthalene-1,4-dicarboxylic acid, diphenyldicarboxylic acid, diphenyletherdicarboxylic acid, diphenylsulfonedicarboxylic acid and diphenylindanedicarboxylic acid.

These aromatic dicarboxylic acids may be used alone or in combination. Particularly preferably, terephthalic acid and isophthalic acid are used in combination. In this case, the molar ratio of terephthalic acid to isophthalic acid is 20/80 to 80/20.

Examples of the aromatic dihydroxy compound include bisphenol A, 1,1-bis(4-hydroxyphenyl)cyclohexane, 2,2-bis(3-methyl-4-hydroxyphenyl)propane, 2,2-bis(3,5-dimethyl-4-hydroxyphenyl)propane, 2-(4-hydroxyphenyl)-2-(3,5-dichloro-4-hydroxyphenyl) propane, hydroquinone and 4,4'-dihydroxybiphenyl. Out of these, bisphenol A, 1,1-bis (4-hydroxyphenyl)cyclohexane and 2,2-bis(3-methyl-4-hydroxyphenyl)propane are preferred. These diol components may be used alone or in combination of two or more.

Examples of the carbonic acid diester include diphenyl carbonate, di-p-tolyl carbonate, dinaphthyl carbonate, di-p-chlorophenyl carbonate and phenyl-p-tolyl carbonate. Out of these, diphenyl carbonate is particularly preferred. The carbonic acid diester may be substituted and used alone or in combination of two or more.

To produce the wholly aromatic polyester carbonate from the above components by melt polymerization, the above components are used in a molar ratio which satisfies the following expressions (1) and (2) at the same time:

$$0.5 \leqq A/B \leqq 0.99 \qquad (1)$$

$$0.95 \leqq C/(A + B) \leqq 1.05 \qquad (2)$$

wherein A is the number of mols of the aromatic dicarboxylic acid, B is the number of mols of the aromatic dihydroxy compound, and C is the number of mols of the carboxylic acid diester.

In the above expression (1), when A/B is substantially 1, the obtained wholly aromatic polyester carbonate contains no carbonate bond and when A/B is smaller than 1, the wholly aromatic polyester carbonate containing a carbonate bond is obtained.

In the above formula (1), when $A/B < 0.5$, the heat resistance of the obtained wholly aromatic polyester carbonate becomes unsatisfactory.

In the above expression (2), when $C/(A + B) < 0.95$, the wholly aromatic polyester carbonate must be polymerized for a long time to reduce the amount of the terminal carboxyl group of the obtained wholly aromatic polyester carbonate to 20 mols/t or less. When $C/(A + B) > 1.05$, the coloring of the obtained wholly aromatic polyester carbonate becomes marked disadvantageously.

To produce the wholly aromatic polyester carbonate used in the present invention, an aliphatic (alicyclic) dicarboxylic acid such as succinic acid, glutaric acid, adipic acid, pimelic acid, suberic acid, azelaic acid, sebacic acid, decanediacid, dodecanediacid or 1,4-cyclohexanedicarboxylic acid or an ester forming derivative thereof, aliphatic (alicyclic) diol such as ethylene glycol, trimethylene glycol, tetramethylene glycol or 1,4-cyclohexane dimethanol or an ester forming derivative thereof, hydroxycarboxylic acid such as p-hydroxybenzoic acid, m-hydroxybenzoic acid or 6-hydroxy-2-naphthoic acid or an ester forming derivative thereof may be copolymerized in a small amount that does not impair the physical properties of the wholly aromatic polyester carbonate (for example, 20 mol% or less of the total), in addition to the above compounds. They may be used in combination of two or more.

To produce the above wholly aromatic polyester carbonate used in the present invention, the above compounds are preferably reacted with one another in the presence of a catalyst.

A specific pyridine compound proposed by the applicant of the present application in JP-A 7-133345 (the term "JP-A" as used herein means an "unexamined published Japanese patent application") is preferred as the catalyst. Examples of the specific pyridine compound include 4-dimethylaminopyridine, 4-diethylaminopyridine, 4-pyrrolidinopyridine, 4-piperidinopyridine, 4-pyrrolinopyridine and 2-methyl-4-dimethylaminopyridine. These compounds may be used alone or in combination of two or more. The compound is used in an amount of preferably 0.01 to 10 mol%, more preferably 0.05 to 1 mol% based on the aromatic dihydroxy compound. The pyridine compound may be used in the form of an organic acid salt or inorganic acid salt.

A conventional ester exchange catalyst may be used in combination with the above pyridine compound as a catalyst.

Examples of the ester exchange catalyst include tin, antimony, strontium, zinc, cobalt, nickel, titanium, germanium, alkali metals and alkali earth metals, which are simple substrates thereof, oxides thereof, hydroxides thereof and halides thereof, inorganic acid salts such as carbonates, organic acid salts and complex salts. The amount of the ester exchange catalyst which has been known, is not particularly limited but preferably 0.001 to 1 mol%, more preferably 0.005 to 0.1 mol% based on the aromatic dihydroxy compound.

By using the above catalysts, the wholly aromatic polyester carbonate having a total content of the terminal phenolic OH group and the terminal carboxyl group of 300 equivalents/$10^6$ g or less and a terminal carboxyl group content of 20 equivalents/$10^6$ g or less can be easily produced.

The polymerization temperature for the melt polymerization of the wholly aromatic polyester carbonate is preferably 280 to 400°C. The term "polymerization temperature" means the temperature of a reaction system in the latter stage or at the end of polymerization. When the polymerization temperature is lower than 280°C, the melt viscosity of the polymer becomes high, thereby making it impossible to obtain a polymer having a high degree of polymerization. When the temperature is higher than 400°C, the deterioration of the polymer readily occurs disadvantageously. For melt polymerization, the polymerization reaction temperature is preferably set to a relatively low level in the initial stage and gradually increased to the above polymerization temperature in the end. The reaction temperature in the initial stage of a polymerization reaction is preferably 160 to 320°C. This polymerization reaction is carried out under normal pressure or reduced pressure. Under normal pressure, the polymerization reaction is preferably carried out under an inert gas atmosphere such as nitrogen or argon. The polymerization reaction time is not particularly limited but almost 1 to 20 hours.

In the present invention, the wholly aromatic polyester carbonates may be used alone or in combination of two or more.

When the wholly aromatic polyester carbonate used in the present invention is to be melt polymerized, additives such as a stabilizer, colorant, pigment and lubricant may be added as required.

A description is subsequently given of the aromatic polycarbonate used in the present invention.

The aromatic polycarbonate used in the present invention is preferably a melt polymerization product of an aromatic dihydroxy compound and a carbonic acid diester. The reason for this is that this melt polymerization product has excellent compatibility with the wholly aromatic polyester carbonate.

Preferably, the above aromatic polycarbonate consists essentially of a recurring unit represented by the following formula (III):

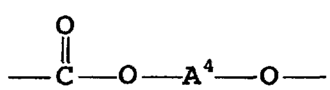

···(III)

wherein $A^4$ is a substituted or unsubstituted aromatic group. More specifically, it comprises the recurring unit represented by the formula (III) in an amount of 80 to 100 mol%.

Examples of the substituted or unsubstituted aromatic group in the formula (III), the above aromatic dihydroxy compound and the carbonic acid diester are the same as those listed for the wholly aromatic polyester carbonate.

The recurring unit represented by the above formula (III) is preferably a recurring unit represented by the following formula (IV):

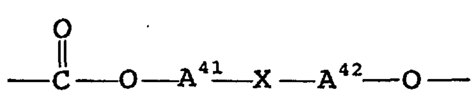

···(IV)

wherein $A^{41}$ and $A^{42}$ are each a substituted or unsubstituted phenylene group, and X is a group represented by the following formula (IV)-a:

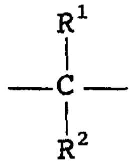

···(IV)-a

wherein $R^1$ and $R^2$ are each independently a hydrogen atom, halogen atom, alkyl group having 1 to 6 carbon atoms, cycloalkyl group having 5 or 6 carbon atoms, aryl group having 6 to 12 carbon atoms or aralkyl group having 7 to 12 carbon atoms, a group represented by the following formula (IV)-b:

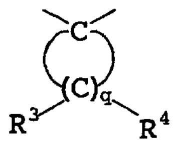

···(IV)-b

wherein $R^3$ and $R^4$ are defined the same as $R^1$ and $R^2$ in the above formula (IV)-a, and q is an integer of 4 to 10, or a group represented by the following formula (IV)-c:

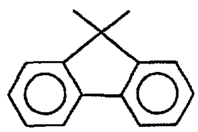

(IV)-c.

More preferably, the above aromatic polycarbonate consists substantially of the recurring unit represented by the above formula (IV) in which $A^{41}$ and $A^{42}$ are both unsubstituted 1,4-phenylene and X is represented by the above formula (IV)-a in which $R^1$ and $R^2$ are both a methyl group.

The above aromatic polycarbonate may be blended with a heat resistant stabilizer, colorant, filler, impact resistance modifier, antioxidant, weathering agent, lubricant, release agent, plasticizer, flame retardant, fluidity modifier, antistatic agent, acid scavenger, optical stabilizer, ultraviolet light absorber, metal inactivating agent, metal soap, nucleating agent, processing stabilizer and the like in limits that do not impair the characteristic properties of the aromatic polycarbonate. These additives may be blended during the above polymerization reaction.

The molten product of the present invention comprises 1 to 99 parts by weight of the above wholly aromatic polyester carbonate and 99 to 1 parts by weight of the above aromatic polycarbonate based on 100 parts by weight of the total of the wholly aromatic polyester carbonate and the aromatic polycarbonate.

The wholly aromatic polyester carbonate and the aromatic polycarbonate preferably contain the same diol component.

The above molten product may be classified into (i) a molten product comprising 50 to 99 parts by weight of the wholly aromatic polyester carbonate and 50 to 1 part by weight of the aromatic polycarbonate or (ii) a molten product comprising 1 part or more and less than 50 parts by weight of the wholly aromatic polyester carbonate and more than 50 parts and 99 parts or less by weight of the aromatic polycarbonate, for convenience.

The former molten product retains the high heat resistance of the wholly aromatic polyester carbonate as it contains 50 parts or more by weight of the wholly aromatic polyester carbonate. Since the amount of the aromatic polycarbonate is 1 part or more by weight, the melt viscosity of the molten product lowers, thereby improving fluidity at the time of molding and impact resistance. The former molten product preferably comprises 50 to 95 parts by weight of the wholly aromatic polyester carbonate and 5 to 50 parts by weight of the aromatic polycarbonate, more preferably 60 to 90 parts by weight of the wholly aromatic polyester carbonate and 40 to 10 parts by weight of the aromatic polycarbonate.

The latter molten product retains high fluidity and mechanical properties as it contains more than 50 parts by weight of the aromatic polycarbonate. Since the amount of the wholly aromatic polyester carbonate is smaller than 50 parts by weight, the heat resistance of the molten product can be improved. When the amount of the aromatic polycarbonate is larger than 99 parts by weight, the effect of improving heat resistance is small disadvantageously. The latter molten product preferably comprises more than 50 parts by weight and 95 parts or less by weight of the aromatic polycarbonate and 5 parts or more by weight and less than 50 parts by weight of the wholly aromatic polyester carbonate, more preferably 60 to 90 parts by weight of the aromatic polycarbonate and 40 to 10 parts by weight of the wholly aromatic polyester carbonate.

The molten product of the present invention preferably has substantially one glass transition point. This glass transition point temperature may be different from the glass transition point temperature of the wholly aromatic polyester carbonate and from the glass transition point temperature of the aromatic polycarbonate.

The molten product of the present invention has a total light transmittance of a 2 mm-thick plate molded therefrom of more than 85 %, preferably more than 87 % and a yellow index (YI) value based on JIS K7103 of 28 or less, preferably 20 or less, more preferably 10 or less, as the characteristic property thereof.

That is, the molten product of the present invention has excellent transparency and a preferred color and good balance between them.

The molten product of the present invention can be produced by melt-mixing the wholly aromatic polyester carbonate with the aromatic polycarbonate.

Melt-mixing are preferably carried out at a temperature higher than the melting temperature of at least one of the wholly aromatic polyester carbonate and the aromatic polycarbonate, preferably what is contained in a larger amount. The appropriate temperature for melt-mixing generally ranges from 260 to 360°C.

Melt-mixing are preferably carried out until a molten product having substantially one glass transition point is formed. The appropriate melt-mixing time which differs according to the types, amounts and temperatures of the used polymers may be easily determined by conducting some experiments by one of ordinary skill in the art.

Melt-mixing may be carried out by known melting and kneading means such as an extruder, Banbury mixer, roller or kneader.

The molten product of the present invention may contain a stabilizer such as a metal salt of phosphorous acid or phosphoric acid or phosphorous acid ester, pigment, dye, reinforcement, filler, impact resistance modifier, heat resisting agent, antioxidant, weathering agent, lubricant, release agent, plasticizer, flame retardant, fluidity modifier and antistatic agent in limits that do not impair the characteristic properties of the molten product (for example, 10 wt% or less based on the molten mixture). They may be used in combination of two or more.

The molten product of the present invention has excellent transparency and color and can be molded into various articles making use of these excellent properties. The molded articles are formed by various means andmay be extrusion molded articles and injection molded articles.

Molded articles obtained from the molten product of the present invention include housings for auto parts such as lens caps for turn lamps, lenses for tail lamps, rear window glass and side window glass, electric and electronic parts such as fuse covers and other parts.

The second molten product provided by the present invention, that is, a molten product which comprises a wholly aromatic polyester in place of the wholly aromatic polyester carbonate in the first molten product has excellent transparency and color like the first molten product.

The wholly aromatic polyester can be advantageously produced by using a dicarboxylic acid and an aromatic dihydroxy compound in a ratio which satisfies the following expression (1)' in place of the above expression (1) in the above process for producing the wholly aromatic polyester carbonate:

$$0.99 < A/B < 1.1 \qquad (1)'$$

wherein A and B are as defined hereinabove.

The second molten product is used for the same application purposes as the first molten product.

## Examples

The following examples are provided for the purpose of further illustrating the present invention but are in no way to be taken as limiting.

The terminal groups of the wholly aromatic polyester carbonate were measured by $^1$H-NMR (the chemical shift of tetramethylsilane was considered as 0 ppm)

The terminal carboxyl group was determined by the proton of a benzene ring adjacent to the terminal carboxyl group (8.2 ppm derived from terephthalic acid and 8.9 ppm derived from isophthalic acid).

The terminal phenolic OH group was determined by the proton (6.7 ppm) of a benzene ring adjacent to the terminal phenolic OH group.

The content of chlorine ($Cl^-$) was measured by treating 100 mg of a sample in a combustion gas absorber

(900°C, Ar-$O_2$ atmosphere) and causing generated gas to be absorbed by pure water in accordance with ion chromatography.

The glass transition point (Tg) was measured by DSC at a temperature elevation rate of 10°C/min (measuring instrument: Model 2950 of TA Instruments Co., Ltd.).

Example 1

The following RAR-1 and PC were prepared. PAR-1: 46.5 parts by weight of terephthalic acid, 19.9 parts by weight of isophthalic acid, 100.3 parts by weight of bisphenol A, 179.8 parts by weight of diphenyl carbonate and 0.049 part by weight of 4-dimethylaminopyridine as a catalyst were charged into a reactor having a vacuum distillation system equipped with a stirrer and nitrogen introduction port, the inside of the reactor was substituted by nitrogen, and a melt polymerization reaction was started under normal pressure at 200°C. After 30 minutes, the temperature was raised to 220° C while normal pressure was maintained, it was confirmed that phenol distilled out at the same temperature, and the inside pressure of the system was gradually reduced. 3 hours after the start of the reaction, it was confirmed that the raw materials were uniformly dissolved. Thereafter, by further increasing the temperature and reducing the pressure, the temperature and pressure of the system were adjusted to 320° C and 0.5 mmHg (66.7 Pa) 5 hours after the start of the reaction. Under the same conditions, melt polymerization was carried out for 2 hours to obtain a wholly aromatic polyester carbonate. The molar ratio of the residual terephthalic acid group, isophthalic acid group and bisphenol A group of the obtained wholly aromatic polyester carbonate was 0.7:0.3:1.1 and the molar ratio of the recurring unit represented by the above formula (I) to the recurring unit represented by the above formula (II) was 91:9. The reduced viscosity measured in a mixed solvent of phenol and 1,1,2,2-tetrachloroethane (weight ratio: 60/40) at a concentration of 1.2 g/100 ml and 35°C was 0.63 dl/g, the amount of the terminal carboxyl group was 10 equivalents/$10^6$ g, the total amount of the terminal phenolic OH group and the terminal carboxyl group was 42 equivalents/$10^6$ g, the proportion of the terminal phenolic OH group to the total of the terminal phenolic OH group and the terminal aryl group was 62 mol%, and the content of chlorine was below the measurement limit (10 ppm). Tg was 194°C. PC: Aromatic polycarbonate obtained by melt polymerizing bisphenol A and diphenyl carbonate (reduced viscosity measured in a mixed solvent of phenol and 1,1,2,2-tetrachloroethane (weight ratio: 60/40) at a concentration of 1.2 g/100 ml and 35°C was 0.71 dl/g. Tg was 150°C).

70 parts by weight of the above PAR-1 and 30 parts by weight of the above PC were mixed together and extruded by a 30 mm-diameter unidirectional double-screw extruder (PCM-30 of Ikegai Co., Ltd.) set to 100 rpm and 340°C to form a pellet.

The obtained pellet was used to form a 2 mm-thick molded plate at a cylinder temperature of 340° C and a mold temperature of 100° C using an injection molding machine. The yellow index value (YI value) of the plate was measured in accordance with JIS K7103. A total light transmittance was measured by NDH-2000 (Nippon Denshoku Kogyo KK). The plate had a YI value of 27, a total light transmittance of 92 % and a Tg of 174°C.

Example 2

The procedure of Example 1 was repeated except that the amount of PAR-1 was changed to 20 parts by weight and the amount of PC was changed to 80 parts by weight. The obtained molten product had a YI value of 4.2, a total light transmittance of 93 % and a Tg of 176°C.

Example 3

PAR-1 (80 parts by weight) and PC (20 parts by weight) were charged into a mixer equipped with a stirrer and molten and mixed together at 300°C under a nitrogen atmosphere. 15 minutes after the start of mixing, the molten product became transparent and had one Tg. The obtained molten product had a YI value of 7, a total light transmittance of 91 % and a Tg of 176°C.

Example 4

PAR-1 (80 parts by weight) and PC (20 parts by weight) were charged into a mixer equipped with a stirrer and molten and mixed together at 340°C under a nitrogen atmosphere. 10 minutes after the start of mixing, the molten product became transparent and had one Tg. The obtained molten product had a YI value of 9, a total light transmittance of 90 % and a Tg of 176°C.

Example 5

PAR-1 (33 parts by weight) and PC (67 parts by weight) were charged into a mixer equipped with a stirrer and molten and mixed together at 300°C under a nitrogen atmosphere. 31 minutes after the start of mixing, the molten product became transparent and had one Tg. The obtained molten product had a YI value of 3, a total light transmittance of 93 % and a Tg of 160°C.

Example 6

PAR-1 (33 parts by weight) and PC (67 parts by weight) were charged into a mixer equipped with a stirrer and molten and mixed together at 340° C under a nitrogen atmosphere. 28 minutes after the start of mixing, the molten product became transparent and had one Tg. The obtained molten product had a YI value of 4, a total light transmittance of 92 % and a Tg of 159°C.

## Claims

1. A molten product which is (1) a product obtained by melt-mixing 1 to 99 parts by weight of a wholly aromatic polyester carbonate comprising 50 to 99 mol% of a recurring unit represented by the following formula (I):

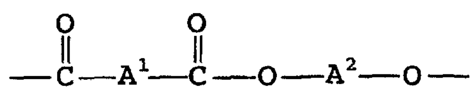

· · · (I)

wherein $A^1$ and $A^2$ are the same or different and each a substituted or unsubstituted aromatic group, and 50 to 1 mol% of a recurring unit represented by the following formula (II):

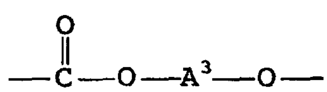

· · · (II)

wherein $A^3$ is a substituted or unsubstituted aromatic group, with 99 to 1 part by weight of an aromatic polycarbonate, the total amount of the wholly aromatic polyester carbonate and the aromatic polycarbonate being 100 parts by weight, and which has (2) a total light transmittance of a 2 mm-thick plate molded therefrom of more than 85 % and (3) a yellow index (YI) value based on JIS K7103 of 28 or less.

2. The molten product of claim 1, wherein the wholly aromatic polyester carbonate contains a terminal carboxyl group and a terminal phenolic OH group in a total amount of 300 equivalents/$10^6$ g or less and the terminal carboxyl group in an amount of 20 equivalents/$10^6$ g or less.

3. The molten product of claim 1, wherein the wholly aromatic polyester carbonate contains a terminal phenolic OH group in an amount of 0.95 equivalent or less based on 1 equivalent of the total of the terminal phenolic OH group and a terminal aryl group.

4. The molten product of claim 1, wherein the wholly aromatic polyester carbonate is a product obtained by melt polymerizing an aromatic dicarboxylic acid, an aromatic dihydroxy compound and a carbonic acid diester.

5. The molten product of claim 1, wherein the wholly aromatic polyester carbonate contains chlorine in an amount of not more than 100 ppm.

6. The molten product of claim 1, wherein the wholly aromatic polyester carbonate comprises 50 to 97 mol% of the recurring unit represented by the above formula (I) and 50 to 3 mol% of the recurring unit represented by the above formula (II).

7. The molten product of claim 1 which comprises 50 to 99 parts by weight of the wholly aromatic polyester carbonate

and 50 to 1 part by weight of the aromatic polycarbonate.

**8.** The molten product of claim 1 which comprises 1 or more part by weight and less than 50 parts by weight of the wholly aromatic polyester carbonate and more than 50 parts by weight and 99 parts or less by weight of the aromatic polycarbonate.

**9.** The molten product of claim 1 which has substantially one glass transition point.

**10.** The molten product of claim 9, wherein the above glass transition point temperature differs from the glass transition point temperature of the wholly aromatic polyester carbonate and from the glass transition point temperature of the aromatic polycarbonate.

**11.** A process for producing the molten product of claim 1, comprising the step of melt-mixing 1 to 99 parts by weight of a wholly aromatic polyester carbonate comprising 50 to 99 mol% of a recurring unit represented by the following formula (I):

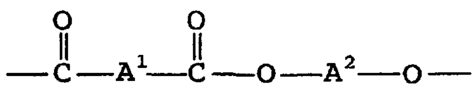

···(I)

wherein $A^1$ and $A^2$ are the same or different and each a substituted or unsubstituted aromatic group, and 50 to 1 mol% of a recurring unit represented by the following formula (II):

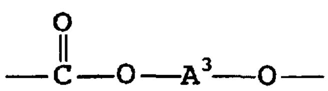

···(II)

wherein $A^3$ is a substituted or unsubstituted aromatic group, with 99 to 1 part by weight of an aromatic polycarbonate, the total amount of the wholly aromatic polyester carbonate and the aromatic polycarbonate being 100 parts by weight.

**12.** The process of claim 11, wherein melt-mixing are carried out until a molten product having substantially one glass transition point is obtained.

**13.** The process of claim 11, wherein melt-mixing are carried out at 260 to 360°C.

**14.** A molded article made from the molten product of claim 1.

**15.** The molded article of claim 11 which is an injection molded article or extrusion molded article.

**16.** Use of the molten product of claim 1 for producing a molded article.

**17.** Use of claim 16, wherein the molded article is an injection molded article or extrusion molded article.

**18.** A molten product which is (1) a product obtained by melt-mixing 1 to 99 parts by weight of a wholly aromatic polyester consisting essentially of a recurring unit represented by the above formula (I) with 99 to 1 part by weight of an aromatic polycarbonate, the total amount of the wholly aromatic polyester and the aromatic polycarbonate being 100 parts by weight, and which has (2) a total light transmittance of a 2 mm-thick plate molded therefrom of more than 85 % and (3) a yellow index (YI) value based on JIS K7103 of 28 or less.

## INTERNATIONAL SEARCH REPORT

International application No. PCT/JP01/05144

**A. CLASSIFICATION OF SUBJECT MATTER**

Int.Cl$^7$ C08L67/00, C08L69/00

According to International Patent Classification (IPC) or to both national classification and IPC

**B. FIELDS SEARCHED**

Minimum documentation searched (classification system followed by classification symbols)

Int.Cl$^7$ C08L67/00-67/03, C08L69/00

Documentation searched other than minimum documentation to the extent that such documents are included in the fields searched

| | | | |
|---|---|---|---|
| Jitsuyo Shinan Koho | 1926-2001 | Toroku Jitsuyo Shinan Koho | 1994-2001 |
| Kokai Jitsuyo Shinan Koho | 1971-2001 | Jitsuyo Shinan Toroku Koho | 1996-2001 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 10-298414 A (GE Plastics Japan Ltd.), 10 November, 1998 (10.11.98), column 1, lines 2 to 7; column 1, lines 24 to 31 (Family: none) | 1-18 |

☐ Further documents are listed in the continuation of Box C. ☐ See patent family annex.

* Special categories of cited documents:
- "A" document defining the general state of the art which is not considered to be of particular relevance
- "E" earlier document but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| 10 September, 2001 (10.09.01) | 25 September, 2001 (25.09.01) |
| Name and mailing address of the ISA/ Japanese Patent Office | Authorized officer |
| Facsimile No. | Telephone No. |

Form PCT/ISA/210 (second sheet) (July 1992)